# EUROPEAN PATENT APPLICATION

(11) **EP 2 031 539 A1**
(43) Date of publication of application: **04.03.2009**
(21) Application number: 06747236.5
(22) Date of filing: 01.06.2006
(51) Int. Cl.: G06F 21/24, G06F 21/00, H04L 9/08

(54) **ENCRYPTING COMMUNICATION METHOD AND ENCRYPTING COMMUNICATION DEVICE**

(71) Applicant: Universal Solution Systems Inc., Tokyo 107-6017 (JP)
(72) Inventor: YAMAGUCHI, Hiroyuki, Okayama-shi Okayama 7038256 (JP); NIWA, Shinichiro, Nara-shi Nara 631-0041 (JP)
(74) Representative: Fuchs, Bernhard
(86) International application number: PCT/JP2006/311476
(87) International publication number: WO 2007/138716

(57) **Abstract**

The present invention provides an information management system, having: a data management device which is disposed at a data center, and encrypts and saves an encrypted data base for saving electronic data and a decoding key of the data base, so as to manage access to the data base; a user device which is disposed at a user site and can communicate with the data management device via an Internet network; and an authentication device, which is disposed at an authentication center, for saving a decoding key for the decoding key of the data base so as to manage an access right of the user to access the data base, and can communicate with the user device and the data management deice via the Internet network, wherein an effective access license and the decoding key for the decoding key of the data base from the authentication center are required for the user to access data of the data center.

## Description

### TECHNICAL FIELD

The present invention relates to an encryption communication method and an encryption communication system, and more particularly to an encryption communication method and encryption communication system used for transmitting/receiving confidential information appropriately over the Internet, and an information management system using the encryption communication method and encryption communication system.

### BACKGROUND

Today as the Internet progresses, various information is being transmitted/received via Internet network. Information being transmitted/received via the Internet includes much confidential information. Such examples of confidential information are information on disease which is transmitted/received between a patient and a hospital or diagnosing source, information on personal, which is transmitted/received between a user and a financial institution such as a bank, credit card use information and credit card use balance information which is transmitted/received between a user and credit card company, and various credit information which is transmitted/received between a user and credit card company.

Various encryption methods have been developed in order to protect such confidential information. "Encryption" refers to altering information so that no one, other than the parties concerned, can understand the meaning of the information. Encryption alters an original text/information which anyone can understand (hereafter called "plain text") into text of which a third party cannot understand (encrypted text). Returning encrypted text back to plain text is referred to as "decoding", and this encryption and decoding methods are collectively called an "encryption method". In the encrypting step and decoding step, secret information called an "encryption key" and "decoding key" are used respectively. For decoding, a secret decoding key is required, so only an individual who knows the decoding key can decode the encrypted text, and can obtain the required confidential information.

As a method for encrypting confidential information when communicating on a network, a common key encryption method and a public key encryption method are known. In the common key encryption method, an encryption key and decoding key are based on a same method, and an example is DES (Data Encryption Standards) used by the National Bureau of Standards.

In the public key encryption method, an encryption key and a decoding key are different. According to this public key encryption method, each user of encryption creates a pair of an encryption key and decoding key, opens the encryption key in a public key list, and holds only the decoding key in secret. In the case of the public key encryption method, the encryption key and decoding key which form a pair are different, where the decoding key cannot be ciphered by the encryption key since a one-way function is used. The public key encryption method is an extremely convenient encryption method for our advanced information society, where many users use confidential information. And as a typical public key encryption method, the RSA encryption method, which uses the difficulty of factorization in prime factors was proposed.

In a conventional encryption communication method using the Internet, confidential information is encrypted and sent using the above mentioned common key encryption method or public key encryption method. However a shortcoming of the conventional encryption communication method is that it is extremely vulnerable to hacking, since an encryption key and decoding key (identical keys in the case of the common key encryption method) and encrypted information are exchanged between two parties: the information provider and the information user.

Recently an encryption communication method called Kerberos, in which safety is improved by intervening with an authentication party in communication between two parties, has been developed (see "Kerberos Network Authentication System (the latest network technical handbook)" by Brian Tung (original author), Jun Kuwamura (translator), published by Piason Education(Dec. 1999)). However safety, including an authentication means and the management of encryption keys, is still weak in the Kerberos method.

As a result, a proposal for an encryption communication method and encryption communication system of which safety is further improved has been desired.

### DISCLOSURE OF THE INVENTION

With the foregoing in view, the present invention provides the following information management systems.
(1) An information management system, having: a data management device which is disposed at a data center, and encrypts and saves an encrypted data base for saving electronic data and a decoding key of the data base, so as to manage access to the data base; a user device which is disposed at a user site and can communicate with the data management device via the Internet network; and an authentication device, which is disposed at an authentication center, for saving a decoding key for the decoding key of the data base so as to manage an access right of the user to access the data base, and which can communicate with the user device and the data management device via the Internet network, and an effective access license and the decoding key for the decoding key of the data base from the authentication center being required for the user to use the data of the data center, wherein the user device (i) sends a request to confirm an access right to access the data of the data base to the authentication device according to an input of the user, and when an access license to access the data is received from the authentication device, sends a data transmission request, along with the access license, to the data management device, and (ii) receives the requested data from the data management device, the data management device (i) confirms presence of the access license when a data transmission request is received from the user device, and sends a request to confirm effectiveness of the access license to the authentication device, when the access license is present, and (ii) decodes the data base using a key obtained by decoding the decoding key of the data base, and extracts the requested data and sends the same to the user device, when the decoding key for the decoding key of the data base is received from the authentication device, and the authentication device (i) judges presence of an access right, when the request to authenticate an access right to access data of the data base is received from the user device, and sends an access license to access the data to the user device, when the access right is present , and (ii) judges effectiveness of the access license when a request to confirm effectiveness of the access license is received from the data management device, and sends the decoding key for the decoding key of the data base to the data management device, when the access license is effective.
(2) The information management system according to (1) above, wherein the user device (i) sends a request to confirm an access right to access data of the data base is sent to the authentication device according to an input of the user, and when an access license to access the data and a decoding key of the data are received from the authentication device, sends a data transmission request, along with the access license, to the data management device, and (ii) decodes the data using the decoding key for the data when the encrypted requested data is received from the data management device, the data management device: (i) confirms presence of the access license when a data transmission request is received from the user device, and sends a request to confirm effectiveness of the access license to the authentication device when the access license is present, and (ii) decodes the data base using the key obtained by decoding the decoding key of the data base, and extracts the requested data, encrypts the same by the encryption key, and then sends the same to the user device when a decoding key for the decoding key of the data base and the decoding key for the data are received from the authentication device, and the authentication device (i) judges presence of the access right, when request to authenticate an access right to access data of the data base is received from the user device, and sends the access license to access the data and a decoding key of the data to the user device, when the access right is present, and (ii) judges effectiveness of the access license, when a request to confirm effectiveness of the access license is received from the data management device, and sends a decoding key for the decoding key of the data base and an encryption key for the data to the data management device, when the access license is effective.
(3) The information management system according to (1) or (2) above, wherein the user device further (i) when a message to notify that authentication of access to the data is disabled is received from the authentication device, outputs the message to notify that the access authentication is disabled to an output device of the user device, and (ii) when a message to notify that access to the data is disabled is received from the data management device, outputs the message to notify that the access is disabled to the output device of the user device, the data management device further (i) when a data transmission request is received from the user device, confirms presence of the access license, and when the access license is absent, sends a message to notify that access is disabled to the user device, and (ii) when a message to notify that the access license is not effective is received from the authentication device, sends a message to notify that access is disabled to the user device, and the authentication device further (i) when a request to authenticate an access right to access the data base is received from the user device, judges presence of the access right, and when the access right is absent, sends a message to notify that the access authentication is disabled to the user device, and (ii) when a request to confirm effectiveness of the access license is received from the data management device, judges effectiveness of the access license, and when the access license is not effective, sends a message to notify that the access license is not effective to the data management device.
(4) The information management system according to any of (1) to (3) above, wherein a plurality of data bases and a plurality of users exist, and each data base is assigned to each user individually, the data management device encrypts and manages each data base individually, and the authentication device manages the data access right of each user, with the access eight being corresponded to a data base assigned to each user.
(5) The information management system according to any of (1) to (4) above, wherein effectiveness of the access license is determined by an elapsed time from time of issuing the access license.
(6) The information management system according to any of (1) to (5) above, wherein the decoding key of the data base is randomly generated when the data base is created, and encrypted and saved in the data management device, and the decoding key for the decoding key of the data base is saved in the authentication device.
(7) The system according to any of (1) to (6) above, wherein the access license which is sent by the authentication device and the decoding key for the decoding key of the data base can be used only once.
(8) The system according to any of (2) to (7) above, wherein the encryption key of the data which is sent by the authentication device and the decoding key for the data can be used only once.
(9) The information management system according to any of (1) to (8) above, wherein the user device saves the record of one or more events selected from copy, print out and hard copy of the data.
(10) The information management system according to one of (1) to (9) above, wherein the data management device saves the record of events related to access to the data.
(11) The system according to any of (1) to (10) above, wherein the authentication device saves the record of events related to the authentication.
   According to the information management system of the present invention, the data base at the data center is encrypted, and a private key used for decoding the data base is also encrypted, and the decoding key is managed by the authentication center. It is preferable that the encryption key and the decoding key used for encryption and decoding of the information which is sent from the data center to the information user (user) are issued by the authentication center to the information user and the data center respectively. Therefore in the information management system of the present invention, the encrypted information can be kept secret no matter which of the data center, authentication center and user is hacked, and an encryption communication method of which safety is extremely improved can be provided.
   It is also preferable that the access license, encryption key and decoding key are encrypted respectively for transmission/reception, whereby security is further improved.
   It is also preferable that the record of one, two or three events selected from copy, print out and hard copy (directly copy or print a screen displayed on the display device) of the data in the user device is saved as a log, whereby illegal use of the data by a user can be prevented.
   Another merit of the encryption communication method of the present invention is that the user can very simply use it even if a multiple configuration exists.
   In another embodiment, the present invention provides the following information management systems.
(12) An information management system, having: a data management device which is disposed at a data center, and encrypts and saves an encrypted data base for saving electronic data and a decoding key of the data base, so as to manage access to the data base; a user device, which is disposed at a user site, for saving a first decoding key for the decoding key of the data base, and can communicate with the data management device via an Internet network; and an authentication device, which is disposed at an authentication center, for saving a second decoding key for the decoding key of the data base so as to manage an access right of the user to access the data base, and can communicate with the user device and the data management device via the Internet network, the first decoding key saved by the user, the second decoding key saved by the authentication center, and an effective access license from the authentication center being required for the user to access data of the data center, wherein the user device (i) sends a request to confirm an access right to access the data of the data base to the authentication device according to an input of the user, and when an access license to access the data is received from the authentication device, sends a data transmission request, along with the access license and the first decoding key, to the data management device, and (ii) receives the requested data from the data management device, the data management device (i) confirms presence of the access license and presence of the first decoding key, when a data transmission request is received from the user device, and sends a request to confirm effectiveness of the access license to access the authentication device, when the access license and the first decoding key are present, and (ii) when the second decoding key for the decoding key of the data base is received from the authentication device, decodes the decoding key of the data base using the first decoding key and the second decoding key, decodes the data base using the decoded decoding key of the decoded data base, and extracts the requested data and sends the same to the user device, and the authentication device (i) judges presence of the access right, when a request to authenticate the access right to access data of the data base is received from the user device, and sends an access license to access the data to the user device, when the access right is present, and (ii) judges effectiveness of the access license, when a request to confirm effectiveness of the access license is received from the data management device, and sends the second decoding key for the decoding key of the data base to the data management device, when the access license is effective.
(13) The information management system according to (12) above, wherein the user device (i) sends a request to confirm an access right to access data of the data base to the authentication device according to an input of the user, and sends a data transmission request, along with an access license and the first decoding, to the data management device, when the access license to access the data and a decoding key of the data are received from the authentication device, and (ii) decodes the data using the decoding key of the data, when the encrypted data requested is received from the data management device, the data management device (i) confirms presence of the access license and presence of the first decoding key, when a data transmission request is received from the user device, and sends a request to confirm effectiveness of the access license to the authentication device, when the access license and the first decoding key are present, and (ii) when the second decoding key for the decoding key of the data base and the encryption key for the data are received from the authentication device, decodes the decoding key of the data base using the first decoding key and the second decoding key, decodes the data base using the decoded decoding key of the data base, and extracts the requested data, encrypts the data using the encryption key for the data, and then sends the same to the user device, and the authentication device (i) judges presence of an access right, when a request to authenticate the access right to access data of the data base is received from the user device, and when the access right is present, the access license to access the data and the decoding key of the data are sent to the user device, and (ii) judges effectiveness of the access license, when a request to confirm effectiveness of the access license is received from the data management device, and sends the second decoding key for the decoding key of the data base and the encryption key of the data to the data management device, when the access license is effective.
(14) The information management system according to (12) or (13) above, wherein the user device further (i) when a message to notify that access authentication to access the data is disabled is received from the authentication device, outputs the message to notify that access authentication is disabled via an output device of the user device, and (ii) when a message to notify that access to the data is disabled is received from the data management device, outputs the message to notify that the access is disabled via the output device of the user device, the data management device further (i) when a data transmission request is received from the user device, confirms presence of the access license and presence of the first decoding key, and when the access license or the first decoding key is absent, sends a message to notify that access is disabled to the user device, and (ii) when a message to notify that the access license is not effective is received from the authentication device, sends a message to notify that access is disabled to the user device, and the authentication device further (i) when a request to authenticate an access right to access the data base is received from the user device, judges presence of the access right, and when the access right is absent, sends a message to notify that the access authentication is disabled to the user device, and (ii) when a request to confirm effectiveness of the access license is received from the data management device, judges effectiveness of the access license, and when the access license is not effective, sends a message to notify that the access license is not effective to the data management device.
(15) The information management system according to any of (12) to (14) above, wherein a plurality of data bases and a plurality of users exist, and each data base is assigned to each user individually, the data management device encrypts and manages each data base individually, and the authentication device manages the data access right of each user, with the access right being corresponded to a data base assigned to each user.
(16) The information management system according to one of (12) to (15) above, wherein effectiveness of the access license is determined by an elapsed time from time of issuing the access license.
(17) The information management system according to any of (12) to (16) above, wherein the decoding key of the data base is randomly generated when the data base is created, and encrypted and saved in the data management device, and the first decoding key for the decoding key of the data base is saved in the user device, and the second decoding key is saved in the authentication device.
(18) The system according to any of (12) to (17) above, wherein the access license which is sent by the authentication device and the decoding key for the decoding key of the data base can be used only once.
(19) The system according to any of (13) to (18) above, wherein the encryption key of the data which is sent by the authentication device and the decoding key of the data can be used only once.
(20) The information management system according to any of (12) to (19) above, wherein the user device saves record of one or more events selected from copy, print out and hard copy of the data.
(21) The information management system according to any of (12) to (20) above, wherein the data management device saves record of events related to access to the data.
(22) The information management system according to one of (12) to (21) above, wherein the authentication device saves the record of events related to the authentication.

In the information management system according to (12) to (22) above, the data base of the data center is encrypted and the decoding key of the data base is also encrypted, and the decoding key for this decoding key of the data base is saved at the authentication center and the user site respectively. This means that both the first decoding key for the data base decoding key owned by the user and the second decoding key for the data base decoding key owned by the authentication center must be used to access a desired data of the data base in the data center, so an information management system with further improved security can be provided.

In preferred mode, the record of one, two or three events selected from copy, print out and hard copy of data in the user device is saved as a log, therefore illegal use of data by a user can be prevented.

### BRIEF DESCRIPTION OF THE DRAWINGS

Fig. 1 is a block diagram depicting a general configuration of an information management system of the present invention;
Fig. 2 is a block diagram depicting a typical configuration of a user device 11 which is disposed in a user group 1 of the information management system of the present invention;
Fig. 3 is a block diagram depicting a typical configuration of an authentication device 31 which is disposed in an authentication center 3 of the information management system of the present invention;
Fig. 4 is a block diagram depicting a typical configuration of a data management deice 21 and data base 22 disposed in a data center 2 of the information management system of the present invention;
Fig. 5 is a flow chart depicting a typical processing operation executed by the CPU 115 of the user device 11 according to a first embodiment of the information management system of the present invention;
Fig. 6A is a flow chart depicting a typical processing operation executed by the CPU 315 of the authentication device 31 according to the first embodiment of the information management system of the present invention;
Fig. 6B is a flow chart depicting another typical processing operation executed by the CPU 315 of the authentication device 31 according to the first embodiment of the information management system of the present invention;
Fig. 7 is a flow chart depicting a typical processing operation executed by the CPU 215 of the data management device 21 according to the first embodiment of the information management system of the present invention;
Fig. 8 is a flow chart depicting a typical processing operation executed by the CPU 115 of the user device 11 according to a second embodiment of the information management system of the present invention;
Fig. 9A is a flow chart depicting a typical processing operation executed by the CPU 315 of the authentication device 31 according to the second embodiment of the information management system of the present invention;
Fig. 9B is a flow chart depicting a second typical processing operation executed by the CPU 315 of the authentication device 31 according to the second embodiment of the information management system of the present invention; and
Fig. 10 is a flow chart depicting a typical processing operation executed by the CPU 215 of the data management device 21 according to the second embodiment of the information management system of the present invention.

### BEST MODE FOR CARRYING OUT THE INVENTION

Embodiments of the present invention will now be described with reference to the drawings.

### (Embodiment 1)

A first embodiment of the present invention provides an information management system, having: a data management device which is disposed at a data center, and encrypts and saves an encrypted data base for saving electronic data and a decoding key of the data base, so as to manage access to the data base; a user device which is disposed at a user site and can communicate with the data management device via the Internet network; and an authentication device which is disposed at an authentication center for saving a decoding key for the decoding key of the data base so as to manage an access right of the user to the data base, and can communicate with the user device and the data management device via the Internet network. In this information management system, an effective access license and a decoding key for the decoding key of the data base from the authentication center are required for the user to access the data of the data center.

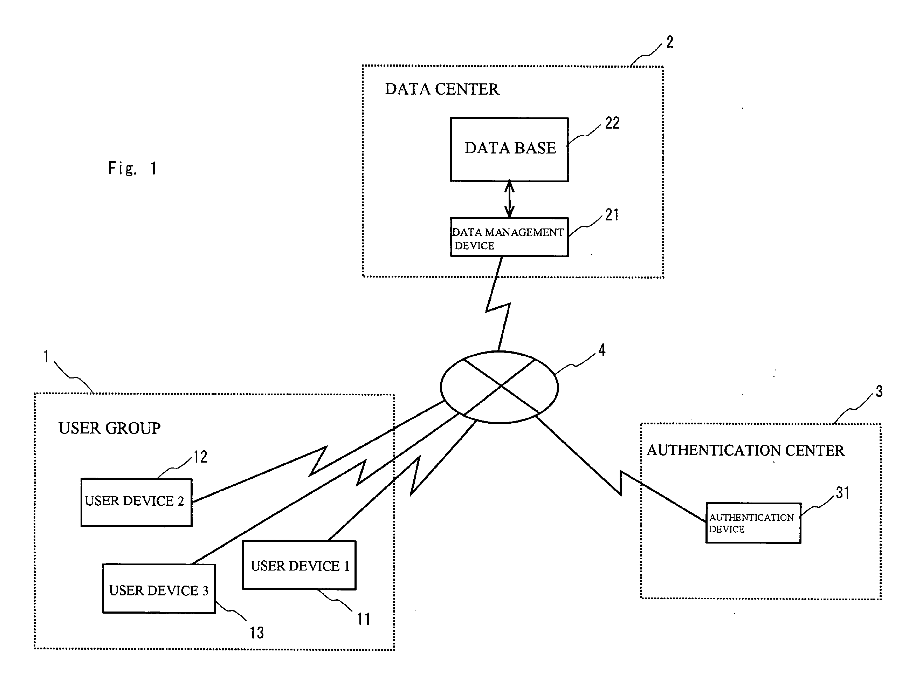

Fig. 1 is a block diagram depicting a general configuration of the information management system according to a first embodiment of the present invention. As Fig. 1 shows, the information management system of the present invention has a user group 1 comprised of user devices (11, 12 and 13), a data center 2 having a data base 22 and a data management device 21 which manages the data base 22, and an authentication center 3 having an authentication device 31.

In the information management system of the present invention, there may be only one user, but normally a plurality of users exist. Fig. 1 shows an example where three users (or three user devices 11, 12 and 13) are included in the user group, but the number of users is not limited to this. Each user device is connected with the management device 21 of the data center 2 and the authentication device 31 of the authentication center 3 via the Internet network 4 so that mutual communication is possible.

The data center 2 has the data base 22 and the data management device 21 for managing access to the data base.

The authentication center 3 has an authentication device 31 for managing information on access rights to the data base 22 of the user, and the authentication device 31 is connected with the user devices (11, 12 and 13) and data management device 21 via the Internet network so that mutual communication is possible.

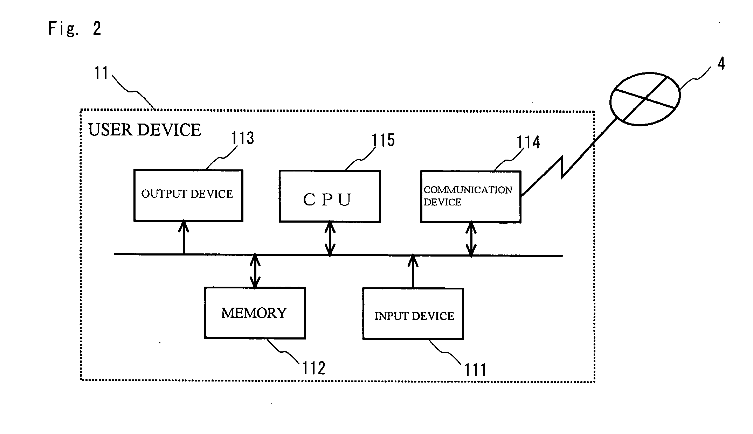

Fig. 2 is a block diagram depicting a typical configuration of the user device 11 of the information management system according to the first embodiment of the present invention. The user device 11 has an input device 111, a memory 112, an output device 113, a communication device 114, and a central processing unit (CPU) 115. The user device 11 is normally comprised of a personal computer having a communication device, a PDA, a portable telephone, and a PHS (preferably a personal computer).

The input device 111 is a device with which the user inputs instructions. Examples of the instructions are: the transmission of a request to authenticate an access right to access the data of the data center 2 to the authentication device 31, the transmission of a data transmission request to the data management device 21, and an output instruction (e.g. a print out, a display on the display device) to the output device 113. The input device 111 is normally comprised of such input means as a keyboard, mouse and touch pad.

The memory 112 is a storage device, such as RAM or ROM, and saves programs for processing which the CPU 115 executes, data acquired from the data base, a decoding key for encrypted data or the like. In a preferred embodiment, a program for saving a record of a copy, print out or hard copy of data performed by the user as a log is stored in the memory 112.

The output device 113 is comprised of a display, printer or the like, and outputs (e.g. displays or prints) the processing status or processing result according to an instruction which is input to the input device or processing procedure which is programmed in advance.

The communication device 114 is an interface for the user device 11 to establish connection with the Internet network 4, and is comprised of a modem enclosed in the user PC, PC card, cable modem, ISDN terminal adapter, ADSL modem and LAN port, for example.

The CPU 115 is comprised of a control unit (not illustrated) and arithmetic unit (not illustrated), and controls operation of each unit of the user device 11 based on the program, or based on the user' instruction which is input via the input device 111.

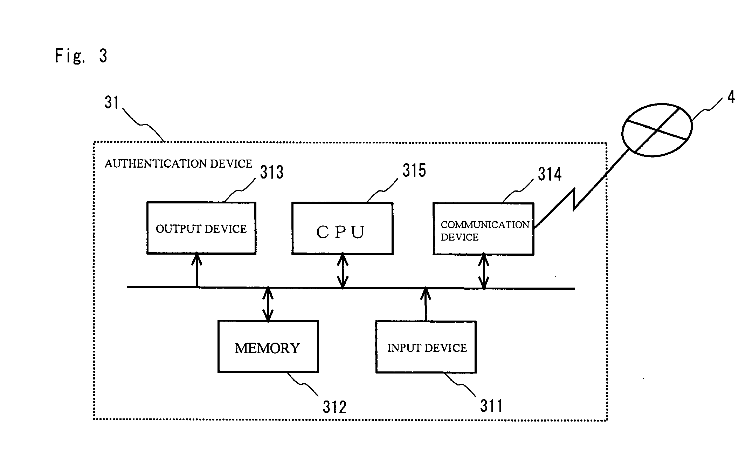

Fig. 3 is a block diagram depicting a typical configuration of the authentication device 31 in the information management system according to the first embodiment of the present invention. The authentication device 31 has an input device 311, a memory 312, an output device 313, a communication device 314 and a CPU 315.

The input device 311 is normally an input means, such as a keyboard, mouse and touch pad, and using this, an operator inputs an instruction (e.g. output to the output device 313, such as a print out, display on a screen).

The memory 312 is a storage device, such as RAM or ROM, and saves programs for processing which the CPU 315 executes, information required for authenticating the access right to access data stored in the data base of the data center (e.g. data identification information, client or user identification information), or decoding key for an encrypted data, for example. In a preferred embodiment, a program for saving a record of authentication information authenticated by the authentication device 31 as a log is stored in the memory 312.

The output device 313 is comprised of a display, printer or the like, and outputs (e.g. displays or prints) the processing status or processing result according to an instruction which is input to the input device or processing procedure which is programmed in advance.

The communication device 314 is an interface for the authentication device 31 to establish connection with the Internet network 4, and is comprised of an ISDN terminal adaptor, cable modem, ADSL modem, PC card and LAN port, for example.

The CPU 315 controls operation of each unit of the authentication device 31 based on a program or based on an instruction which is input via the input device.

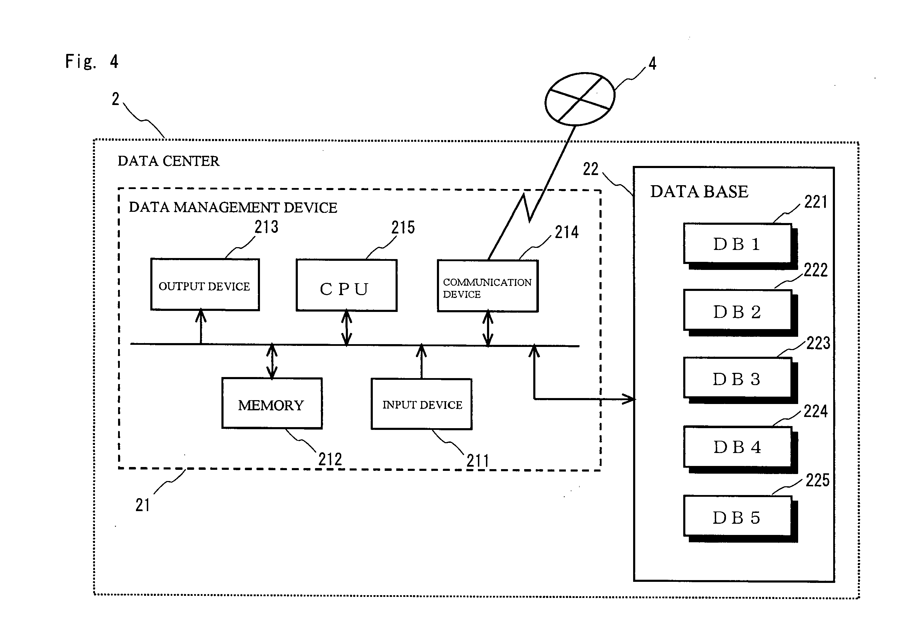

Fig. 4 is a block diagram depicting a typical configuration of a data management device 21 and data base 22 disposed in the data center 2 of the information management system according to the first embodiment of the present invention.

The data management device 21 has an input device 211, a memory 212, an output device 213, a communication device 214 and a CPU 215.

The data base 22 has one or more data bases (DB 1 to DB5 (221 to 225) in the example of Fig. 4) which are large capacity storage devices, for example. The data base 22 typically has a data base (DB 1 to DB5 (221 to 225)) separated for each client. The types of data and clients which are saved in the data base 22 are not particularly restricted, but could be the following combinations, for example.
(1) Gene data bank / gene information
(2) Hospital / patient chart information
(3) Credit check company / credit information
(4) Financial institution / account information
(5) Credit company / card use information
(6) Software development company / source codes
(7) Customer management system / customer attributes, purchasing history
(8) ASP system / data base
(9) General company / accounting, customers, personnel, sales, purchasing information
(10) Physical distribution and warehouse company / inventory information, distribution information
(11) Research and development organization / research data

The input device 211 is a device for an operator to input an instruction. An example of an instruction is output (e.g. print out, display on a screen) to the output device 213. The input device 211 is an input means, such as a keyboard, mouse and touch pad.

The memory 212 is a storage device, such as RAM or ROM, and saves programs for processing which the CPU 215 executes, a decoding key for the decoding key of the data base, or an encryption key for data, for example. In a preferred embodiment, a program for saving a record of events on access to file or data of a data base 22 as a log is stored in the memory 212.

The output device 213 is comprised of a display, printer or the like.

The communication device 214 is an interface for the data management device 21 to establish a connection with the Internet network 4, and is comprised of an ISDN terminal adaptor, cable modem, ADSL modem, PC card and LAN port, for example.

The CPU 215 controls operation of each unit of the data management device 21 based on a program or based on an instruction which is input via the input device.

Now a processing operation performed by each CPU of the user device 11, data management device 21 and authentication device 31 of the information management system according to the first embodiment of the present invention will be described.

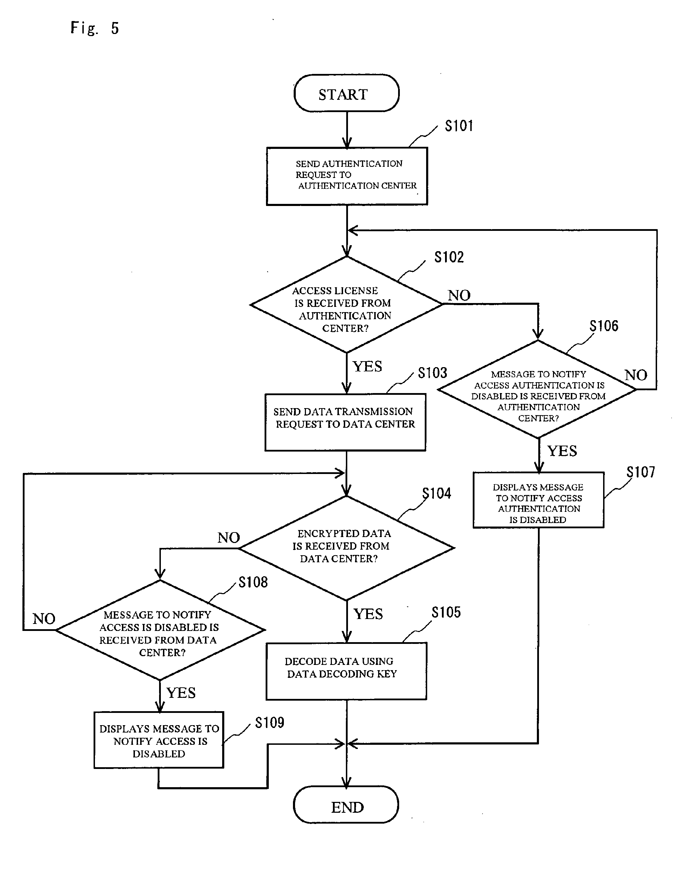

Fig. 5 is a flow chart depicting a typical processing operation performed by the CPU 115 of the user device 11 according to the first embodiment of the information management system of the present invention.

If the user inputs an instruction to request authentication to the authentication center in order to access data of the data base 22 via the input device 111, the CPU 115, which is in standby status at the start, sends an authentication request to the authentication device 31 of the authentication center 3 via the communication device 114 in step S101.

Then in step S102, it is judged whether an access license and a decoding key for the desired data are received from the authentication device 31 of the authentication center 3, and if received (S102: YES), the CPU 115 sends a data transmission request, along with the access license, to the data management device 21 of the data center 2 via the communication device 114 in step S103, and processing advances to step S104.

In step S104, it is judged whether the data requested by the user is received from the data management device 21 of the data center 2, and if received (S104: YES), processing advances to step S105. In this case, the data received from the data management device 21 has normally been encrypted in order to improve security. Therefore in step S105, this encrypted data is decoded using the data decoding key sent from the authentication device 31 1 in step S102, and processing ends. The user can use this decoded data for a desired purpose.

In a preferred embodiment, a program is installed in the memory 112 of the user device 11 in advance, so that a record of copy, print out or hard copy of the data executed by the user is saved as a long, and the CPU 115 executes this program. Since an illegal user can be easily identified even if the data is used illegally, the illegal use of data by a user can be prevented, and an information management system of which safety is further improved can be provided.

If the access license and the decoding key for the data are not received from the authentication device 31 of the authentication center 3 in step S102 (S102: NO), on the other hand, processing advances to step S106, and it is judged whether a message to notify the access authentication is disabled is received from the authentication center 3, and if not received (step S106: NO), processing returns to step S102. If received (step S106: YES), the message to notify that access authentication is disabled is output (e.g. displayed or printed out) via the output device 113 in step S107, and processing ends.

If, in step S104, the data requested by the user is not received from the data management device 21 of the data center 2 (step S104: NO), it is judged whether a message to notify that access is disabled is received from the data management device 21 of the data center 2 in step S108, and if not received (step S108: NO), processing returns to step S104. If received (step S108: YES), the message to notify that access is disabled is output (e.g. displayed) via the output device 113 (e.g. display) in step S109, and processing ends.

In the above processing operation of the CPU 115, the steps of output by the output device 111 in step S107 and S109 are optional (can be omitted).

Now processing is performed by the CPU 315 of the authentication device 31 according to the first embodiment of the information management system of the present invention will be described.

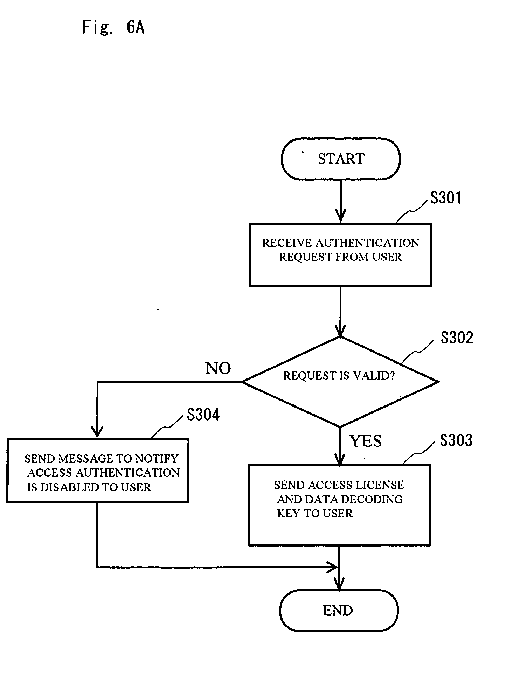

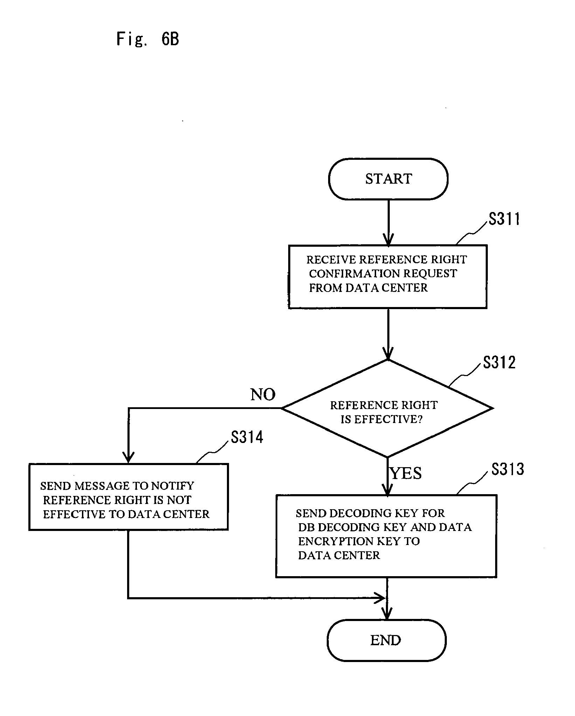

Fig. 6A and Fig. 6B are flow charts depicting typical operations performed by the CPU 315 of the authentication device 31. Fig. 6A shows processing performed by the CPU 315 when the authentication device 31 received a request to authenticate the access right to access the data base 22 from the user device 11, and Fig. 6B shows processing performed by the CPU 315 when the authentication device 31 received a request to authenticate effectiveness of the user' access license for the data base 22 from the data management device 21.

As Fig. 6A shows, if the authentication request from the user device 11 is received in step S301, the CPU 315, which is in standby status at the start, judges whether the request is valid in step S302, and if valid (S302: YES), the CPU 315 sends an access license and a decoding key for the data requested by the user to the user device 11 in step S303, and processing ends. If the request is not valid in step 302 (S302: NO), processing advances to step S304, a message to notify that access authentication is disabled is sent to the user device 11, and processing ends. This judgment on whether the authentication request is valid or not can be made by using an ID and password, an ID and one-time password, or such biometrics as fingerprint identification, and retina collation, for example.

As Fig. 6B shows, if the request to confirm effectiveness (reference right) of the access license sent from the user is received from the data management device 21 in step 5311, the CPU 315, which is in standby status at the start, judges whether the reference right is effective in step S312, and if effective (S312: YES), processing advances to step S313, where a decoding key for the decoding key of the data base requested by the user and an encryption key to encrypt the data extracted from the decoded data base are sent to the data management deice 21 of the data center 2, and processing ends. If the reference right is not effective in step S312 (S312: NO), on the other hand, processing advances to step S314, where a message to notify that the reference right is not effective is sent to the data management device 21, and processing ends.

In step S312 to judge the effectiveness of the access license in the authentication device 31, the effectiveness of the access license can be determined depending on whether the user is registered in the authentication device 31 or not, whether the user has a right to refer to the requested data or not, whether the access license expired or not, and whether access is the first time or not (in the case of the one-time key method) or the like. For example, if it is determined in advance that the access license is effective during 20 minutes from issue thereof, then a message to notify the access is disabled is replied to a request to confirm effectiveness of an access license which is received after 20 minutes have elapsed since issue of the access license. The expiration time is not limited to this example, but can be determined arbitrarily.

In a preferred embodiment, information on authentication in the authentication device 31 is saved in the memory 312 as a log, whereby history can be easily referred to, even if the authentication information is used illegally.

Now processing performed by the CPU 215 of the data management device 21 according to the first embodiment of the information management system of the present invention will be described.

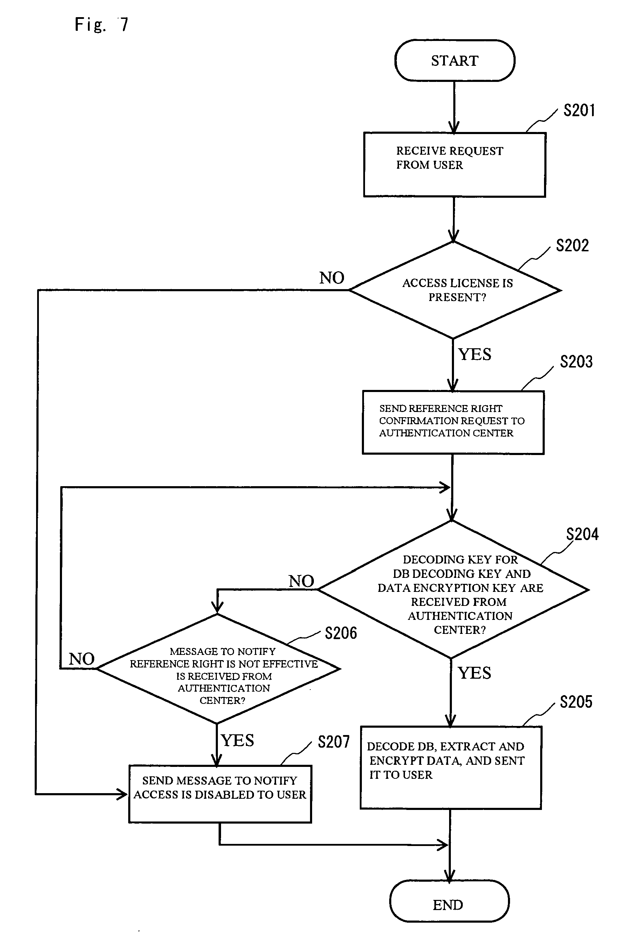

Fig. 7 is a flow chart depicting a typical processing operation performed by the CPU 215 of the data management device 21 according to the first embodiment of the information management system of the present invention. If a data transmission request is received from the user in step S201, the CPU 215, which is in standby status at the start, judges a presence of an access license in step S202, and if the access license is present (S202: YES), a request to confirm the reference right of the user is sent to the authentication device 31 of the authentication center 3 in step S203.

Then in step S204, it is judged whether a decoding key for the DB decoding key and a data encryption key are received from the authentication device 31, and if received (step S204: YES), the CPU 215 decodes the decoding key of the data base requested by the user in step S205 using the above mentioned decoding key, and decodes the data base using the decoding key for the decoded data base, so as to extract the requested data, then encrypts this data using the data encryption key which is sent from the authentication device 31, and sends this to the user device 11, and processing ends.

If the access license is absent in step S202 (S202: NO), on the other hand, processing advances to step S207, and a message to notify that access is disabled is sent to the user device 11 via the communication device 214, and processing ends.

If the decoding key for the data base decoding key and the data encryption key are not received from the authentication device 31 in step S204 (S204: NO), it is judged whether a message to notify that the reference right is not effective was received from the authentication device 31 in step S206, and if not received (S206: NO), processing returns to step S204, and if received (S206: YES), a message to notify that the access is disabled is sent to the user device 11 in step S207, and processing ends.

In a preferred embodiment, events related to accessing a data or file of the data device 21 are saved in the memory 212 as a log, whereby history can be easily referred to, even if access occurred illegally.

In the information management system of the present invention, the individual data bases (221, 222, 223, 224 and 225) managed by the data management device 21 of the data management center 2 are typically encrypted by the encryption program based on the individual encryption key method. The encryption programs (encryption algorithms) used here are MISTY1, MISTY2, IDEA and RC2, for example. The decoding key for the individual encryption key is generated at random when the respective data base is created, and is held in an encrypted state in the memory 212 of the data management device 21. This decoding key is further encrypted, and identifying the decoding key is impossible even for an individual who created the data base. The decoding key for the data base decoding key is managed by the authentication center 3 (held in the authentication device 31). Thereby the encrypted data cannot be decoded unless the decoding key saved in the authentication device 31 is obtained, even if a third party illegally enters the data base 22 of the data center 2. In this way, the present invention provides an information management system of which security is improved.

In the information management system of the present invention, the access license, key and data to be transmitted/received among the authentication device 31, user device (11, 12 and 13) and the data management device 21 need not always be encrypted. In other words, in the above description of the processing operation performed by each CPU, the authentication device 31 sending the decoding key for the data to the user device (11, 12 and 13) and sending the encryption key of the data to the data management device 21, the data management device 21 encrypting the data before transmission, and the user device (11, 12 and 13) decoding the encrypted data are optional. However, it is preferable to encrypt and send/receive the data, key and access license, which are communicated via the Internet, in terms of security. The key for encryption and decoding and the access license are preferably sent/received by the public key method, and the data is sent/received by the common key method. The public key method used here can be a publically known method, such as the RSA encryption method, ElGamal encryption method and Diffie - Hellman key distribution method (see the later mentioned reference documents).

In a preferred embodiment, the encryption key and the decoding key and/or the access license, which are issued by the authentication center, can be used only once (one-time key), whereby the data base of the data center cannot be decoded, and data on the network cannot be intercepted even if the encryption key is stolen due to robbery of the terminal of the registered user, for example, therefore safety can be further improved.

In the above examples, a mode of the access license and decoding key of the data being sent from the authentication center 3 to the user was shown, but the present invention is not limited to this mode to achieve the object of the invention, and the expiration time, for example, may be set for the data decoding key itself when it is issued (the data decoding key and access license are integrated) instead of separating the access license and the data decoding key.

### (Embodiment 2)

A second embodiment of the present invention provides an information management system, having: a data management device which is disposed at a data center, and encrypts and saves an encrypted data base for saving electronic data and a decoding key of the data base, so as to manage access to the data base; a user device which is disposed at a user site for saving a first decoding key for the decoding key of the data base, and can communicate with the data management device via an Internet network; and an authentication device which is disposed at an authentication center for saving a second decoding key for the decoding key of the data base so as to manage an access right of the user to the data base, and can communicate with the user device and the data management device via the Internet network. In this information management system, the first decoding key stored by the user, the second decoding key stored by the authentication center, and an effective access license from the authentication center are required for the user to access the data of the data center.

The general configuration of the information management system according to the second embodiment of the present invention and the typical configuration of the composing elements thereof are the same as the information management system according to the first embodiment of the present invention, which was described with reference to Fig. 1 to Fig. 4, so description here is omitted.

Now the processing operation performed by each CPU of the user device 11, data management device 21 and authentication device 31 of the information management system according to the second embodiment of the present invention will be described.

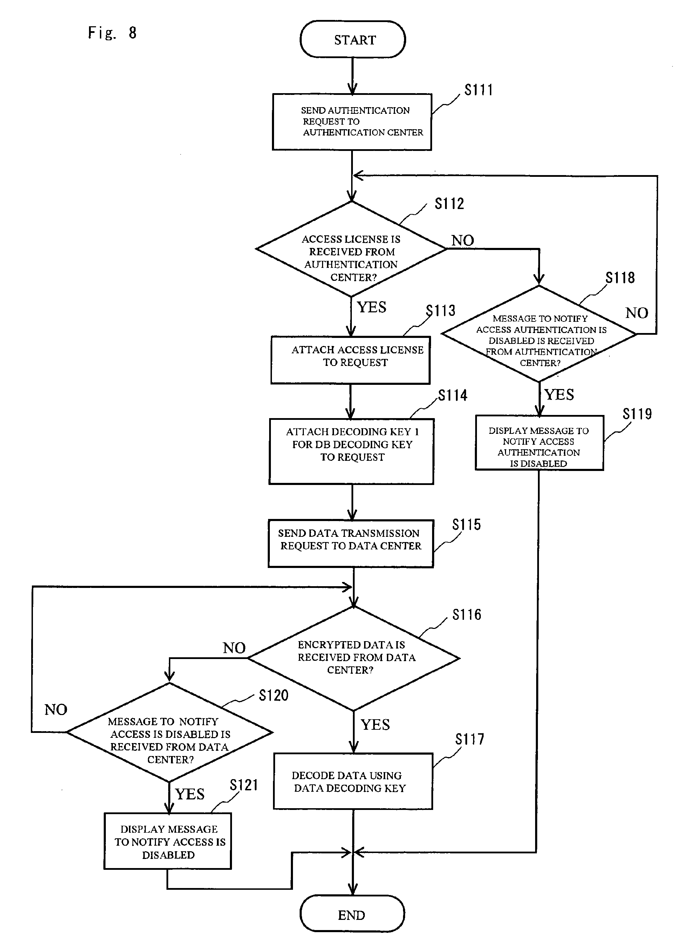

Fig. 8 is a flow chart depicting a typical processing operation performed by the CPU 115 of the user device 11 according to the second embodiment of the information management system of the present invention.

If the user inputs an instruction to request authentication to the authentication center in order to access data of the data base 22, via the input device 111, the CPU 115, which is in standby status at the start, sends an authentication request to the authentication device 31 of the authentication center 3 via the communication device 114 in step S111.

Then in step S 112, it is judged whether an access license and a decoding key for the desired data are received from the authentication device 31 of the authentication center 3, and if received (S 112: YES), the CPU 115 attaches the access license to the request to be sent to the data management device 21 of the data center 2 in step S 113, attaches the first decoding key for the data base decoding key in step S 114, and sends these to the data management device 21 of the data center 2 via the communication device 114 in step S 115, and processing advances to step S 116. The sequence of steps S 113 and S 114 may be reversed, or steps S 113, S 114 and S 115 may be integrated into one step.

In step S 106, it is judged whether the data requested by the user is received from the data management device 21 of the data center 2, and if received (step S 116: YES), processing advances to step S 117. In this case, the data received from the data management device 21 has typically been encrypted in order to improve security. Therefore in step S 117, this encrypted data is decoded using the data decoding key sent from the authentication device 31 in step S 112, and processing ends. The user can use this decoded data for a desired purpose.

In a preferred embodiment, a program is installed in the memory 112 of the user device 11 in advance so that a record of copy, print out or hard copy of the data executed by the user is saved as a log, and the CPU 115 executes this program. Since a user who used data illegally can easily be identified, illegal use of data by a user can be prevented, and an information management system of which safety is further improved can be provided.

If the access license and the decoding key for the data are not received from the authentication device 31 of the authentication center 3 in step S 112 (S 112: NO), on the other hand, processing advances to step S118, and it is judged whether a message to notify the access authentication is disabled is received from the authentication center 3, and if not received (step S 118: NO), processing returns to step S 112. If received (step S 118: YES), the message to notify that access authentication is disabled is output (e.g. displayed or printed out) in step S 119 via the output device 113, and processing ends.

If the data requested by the user is not received from the data management device 21 of the data center 2 in step S 116 (step S 116: NO), it is judged whether a message to notify that access is disabled is received from the data management device 21 of the data center 2 in step S120, and if not received (step S120: NO), processing returns to step S 116. If received (step S120: YES), the message to notify that access is disabled is output (e.g. displayed) via the output device 113 (e.g. display) in step S121, and processing ends.

In the above processing operation of the CPU 115, the steps of output by the output device 111 in steps S 118 and S121 are optional.

Now the processing performed by the CPU 315 of the authentication device 31 according to the second embodiment of the information management system of the present invention will be described.

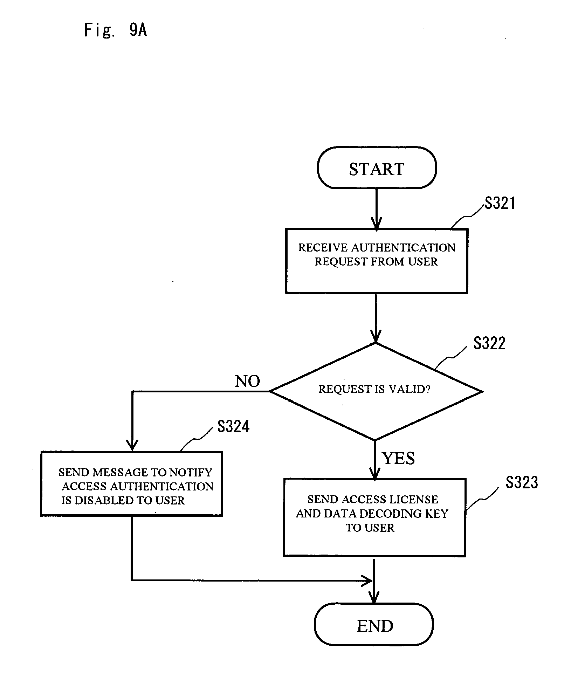

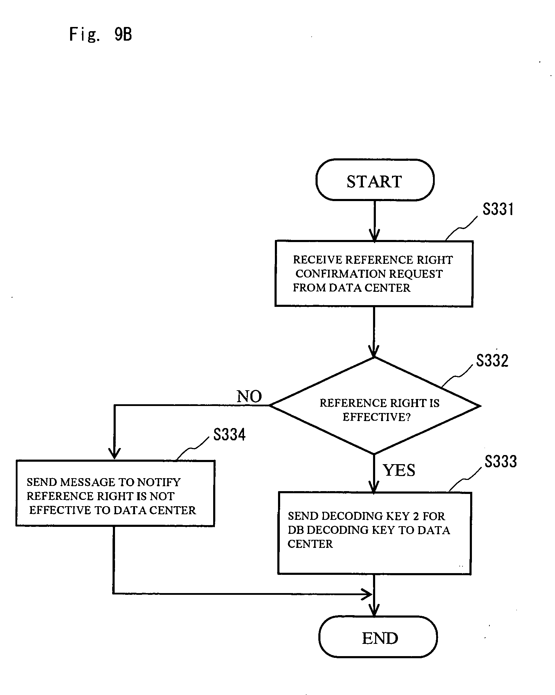

Fig. 9A and Fig. 9B are flow charts depicting typical processing operations performed by the CPU 315 of the authentication device 31. Fig. 9A shows the processing performed by the CPU 315 when the authentication device 31 received a request to authenticate the access right to access the data base 22 from the user device 11, and Fig. 9B shows the processing performed by the CPU 315 when the authentication device 31 received a request to authenticate effectiveness of the user' access license for the data base 22 from the data management device 21.

As Fig. 9A shows, if the authentication request is received from the user device 11 in step S321, the CPU 315, which is in standby status at the start, judges whether the request is valid in step S322, and if valid (S322: YES), the CPU 315 sends an access license and a decoding key for the data requested by the user to the user device 11 in step S323, and processing ends. If the request is not valid in step S322 (S322: NO), processing advances to step S324, a message to notify that access authentication is disabled is sent to the user device 11, and processing ends. This judgment on whether the authentication request is valid or not can be made using an ID and password, an ID and one-time password, or such biometrics as fingerprint authentication and retina collation, for example.

As Fig. 9B shows, if the request to confirm effectiveness (reference right) of the access license sent from the user is received from the data management device 21 in step S331, the CPU 315, which is in standby status at the start, judges whether the reference right is effective in step S332, and if effective (S332: YES), processing advances to step S333, where a second decoding key for the decoding key of the data base requested by the user and an encryption key to encrypt the data extracted from the decoded data base are sent to the data management device 21 of the data center 2, and processing ends. If the reference right is not effective in step S332 (S332: NO), on the other hand, processing advances to step S334, where a message to notify that the reference right is not effective is sent to the data management device 21, and processing ends.

In step S332 to judge effectiveness of the access license in the authentication device 31, the effectiveness of the access license can be determined depending on whether the user is registered in authentication or not, whether the user as a right to refer to the requested data or not, whether the access license expired or not, or whether the access is the first time or not (in the case of one-time key method) or the like. For example, if it is determined in advance that the access license is effective during 20 minutes from issue thereof, then a message to notify the access is disabled is replied to a request to confirm effectiveness of an access license which is received after 20 minutes have elapsed since the issue of the access license. The expiration time is not limited to this example, but can be determined arbitrarily.

In a preferred embodiment, information on authentication in the authentication device 31 is saved in the memory 312 as a log, whereby history can be easily referred to, even if the authentication information is used illegally.

Now the processing performed by the CPU 215 of the data management device 21 according to the second embodiment of the information management system of the present invention will be described.

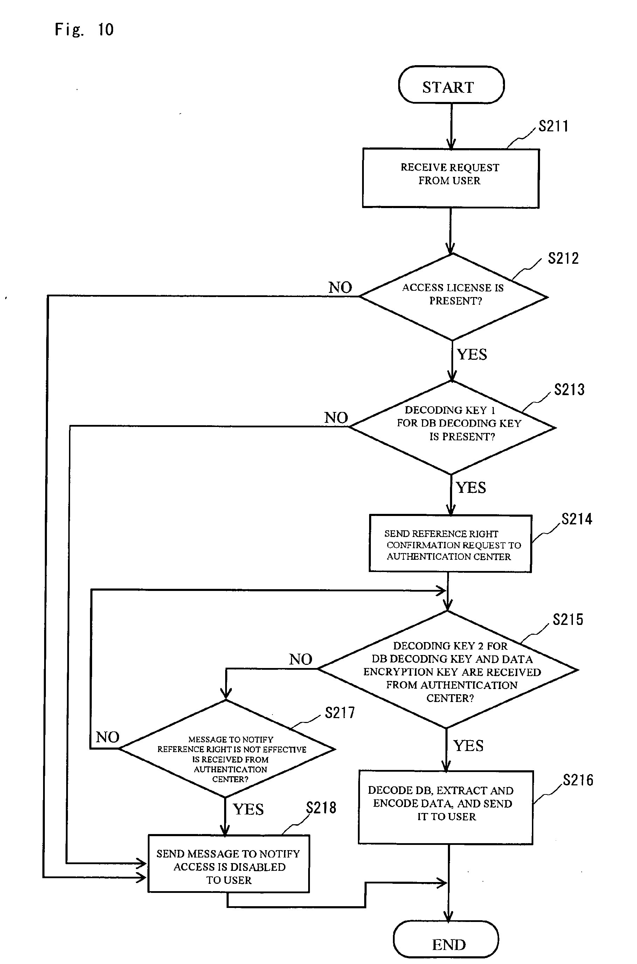

Fig. 10 is a flow chart depicting a typical processing operation performed by the CPU 215 of the data management device 21 according to the second embodiment of the information management system of the present invention. If a data transmission request is received from the user in step S211, the CPU 215, which is in standby status at the start, judges a presence of an access license in step S212, and if the access license is present (S212: YES), processing advances to step S213, and it is judged whether a first decoding key for the data base decoding key is present. If the first decoding key is present (S213: YES), processing advances to step S214, and a request to confirm the reference right of the user is sent to the authentication device 31 of the authentication center 3.

Then in step S215, it is judged whether a second decoding key for the DB decoding key and a data encryption key are received from the authentication device 31, and if received (step S215: YES), the CPU 215 decodes the decoding key of the data base including the data requested by the user in step S216 using the above mentioned first and second decoding keys, and decodes the data base using the decoding key for the decoded data base, extracts the requested data, then encrypts this data using the data encryption key which is sent from the authentication device 31, and sends this to the user device 11, and processing ends.

If the access license is absent in step S212 (S212: NO), on the other hand, processing advances to step S218, and a message to notify that access is disabled is sent to the user device 11 via the communication device 214, and processing ends.

If the first decoding key for the data base decoding key is absent in step S213 (S213: NO), processing advances to step S218, and a message to notify that access is disabled is sent to the user device 11 via the communication device 214, and processing ends.

If the second decoding key for the data base decoding key and the data encryption key were not received from the authentication device 31 in step S215 (S215: NO), it is judged whether a message to notify that the reference right is not effective was received from the authentication device 31 in step S217, and if not received (S217: NO), processing returns to step S215, and if received (S217: YES), a message to notify that the access is disabled is sent to the user device 11 in step S218, and processing ends.

In a preferred embodiment, events related to access a data or file of the data device 21 are saved in the memory 212 as a log, whereby history can be easily referred to, even if illegal access occurred.

In the information management system according to the second embodiment of the present invention, the individual data bases (221, 222, 223, 224 and 225) managed by the data management device 21 of the data management center 2 are typically encrypted by the encryption program based on the individual encryption key method. The encryption programs (encryption algorithms) used here are MISTY 1, MISTY2, IDEA and RC2, for example.

The decoding key for the individual encryption key is generated at random when a respective data base is created, and is held in an encrypted state in the memory 212 of the data management device 21. This decoding key is further encrypted, and identifying the decoding key is impossible even for a user or an individual who created the data base. In the information management system according to the second embodiment of the present invention, the decoding key for the data base decoding key is comprised of a first decoding key which is managed by the user 1 (stored in the user device 11), and a second decoding key which is managed by the authentication center 3 (stored in the authentication device 31). Therefore the decoding key for the data base 22 can be decoded only when both the first decoding key managed by the user 1 and the second decoding key managed by the authentication center 3 are obtained.

Thereby the encrypted data cannot be decoded unless the first decoding key saved in the user device 11 and the second decoding key saved in the authentication device 31 are obtained, even if a third party illegally enters the data base 22 of the data center 2. In this way, the present invention provides an information management system of which security is further improved.

In the information management system of the present invention, the access license, key and data to be transmitted/received among the authentication device 31, user devices (11, 12 and 13) and data management device 21 need not always be encrypted. In other words, in the description of the processing operation performed by each CPU, the authentication device 31 sending the decoding key for the data to the user device (11, 12 and 13), and sending the encryption key for the data to the data management device 21, the data management device 21 encrypting the data before transmission, and the user device (11, 12 and 13) decoding the encrypted data are optional. However, it is preferable to encrypt and send/receive the data, key and access license, which are communicated via the Internet, in terms of security. The key for encryption and decoding, and the access license are preferably sent/received by the public key method, and the data is sent/received by the common key method. The public key method used here can be a publically known method, such as the RSA encryption method, ElGamal encryption method, and Diffie - Hellman key distribution method (see the later mentioned reference documents).

In a preferred embodiment, the encryption key and decoding key and/or the access license which are issued by the authentication center can be used only once (one-time key), whereby the data base of the data center cannot be decoded, and data on the network cannot be intercepted, even if the encryption key is stolen by robbery of the terminal of the registered user, for example, therefore safety can be further improved.

In the above examples, a mode of the access license and decoding key of the data being sent from the authentication center 3 to the user was shown, but the present invention is not limited to this mode to achieve the object of the invention, and the expiration time, for example, may be set for the data decoding key itself when it is issued. (The data decoding key and the access license are integrated.)

Embodiments of the present invention were described above with reference to the drawings, but the scope of the present invention is not limited to this, and various changes are possible within a range that does not exceed the present invention as stated in the Claims, and these variant forms are included in the scope of the present invention.

Documents on encryption are shown below for reference.
(1) J. Kelsey, B. Schneier, and D. Wagner, "Related-Key Crypta-nalysis of 3-WAY, Biham-DES, CAST, DES-X, NewDES, RC2, and TEA," ICICS '97 Proceedings
(2) J. Kelsey, B. Schneier, and D. Wagner, "Key-Schedule Crypta-nalysis of 3-WAY, IDEA, G-DES, RC4, SAFER, and Triple-DES," Advances in Cryptology--CRYPTO '96 Proceedings
(3) Shinichi Ikeno, Kenji Koyama: "Modern Encryption Theory", Chapters 3, 3.4, The Institute of Electronics, Information and Communication Engineers (IEICE), 1986
(4) B. Schneier, "Applied Cryptography, 2nd edition", John Wiley and Sons, 1996
(5) J.J. Quisquater and C. Couvereur, "First Decipherment Algorithm for RSA Public Key Cryptosystem", Electronic Letters, v.18,1982 ,pp. 155-168
(6) Eiji Okamoto: "A Guide to Encryption Theory", Kyoritsu Shuppan Co. Ltd., 1993
(7) Tatsuaki Okamoto, Hiroshi Yamamoto: "Modern Encryption", Sangyo Tosho, 1997
(8) Tatsuaki Okamoto, Kazuo Ohta: "Encryption, Zero Knowledge Proof, Number Theory", Kyoritsu Shuppan Co. Ltd., 1995
(9) Tatsuaki Okamoto, Hiroshi Yamamoto: "Modern Encryption", Sangyo Tosho, 1997
(10) Alfred J. Menezes, Paul C. van Oorschot, Scott A. Vanstone : "Handbook of Applied Cryptography ", 1997, CRC Press
(11) Koichi Sakurai: "Basics of Encryption Theory", Kyoritsu Shuppan Co., Ltd., 1996
(12) Shinichi Ikeno, Kenji Koyama: "Modern Encryption Theory", IEICE, 1986
(13) Shigeo Tsujii: "Encryption", Kodansha Sensho Metier, 1996
(14) IEICE: "Design and Evaluation of Encryption Algorithm' Workshop Lectures", IEICE, 1996
(15) Osamu Miyatake, Kazumasa Wakimoto: "Random Number and Monte Carlo Method", Morikita Publishing Co., Ltd., 1978
(16) Akihiro Shirahasui: "Security and Electronic Mail in PC Environment", Software Design, June 1997 Issue, Gijutsu Hyohron Co., Ltd.
(17) Hideki Imai: "An Account on Encryption", Japanese Standards Association, 1993
(18) Toyohiko Kikuchi: "Computer Network Encryption System for Internet Century", NEC Creative, 1995

### INDUSTRIAL APPLICABILITY

The encryption communication method, the encryption communication system, and the information management system using this method and systems of the present invention can be applied to transmitting/receiving confidential information via the Internet. In particular, the encryption communication method, the encryption communication system and the information management system using this method and systems of the present invention can be suitably used to transmit/receive information on illness transmitted/received between patient and hospital or diagnosis source, information on personal accounts transmitted/received between a user and such a financial institution as a bank, card use information and card use balance information transmitted/received between a user and credit company, and various credit information transmitted/received between a user and credit check company via the Internet.

## Claims

1. An information management system, comprising:
a data management device which is disposed at a data center, and encrypts and saves an encrypted data base for saving electronic data and a decoding key of the data base, so as to manage access to the data base;
a user device which is disposed at a user site and can communicate with the data management device via the Internet network; and
an authentication device, which is disposed at an authentication center, for saving a decoding key for the decoding key of the data base so as to manage an access right of the user to access the data base, and which can communicate with the user device and the data management device via the Internet network,
an effective access license and the decoding key for the decoding key of the data base from the authentication center being required for the user to use the data of the data center, wherein
the user device (i) sends a request to confirm an access right to access the data of the data base to the authentication device according to an input of the user, and when an access license to access the data is received from the authentication device, sends a data transmission request, along with the access license, to the data management device, and (ii) receives the requested data from the data management device,
the data management device (i) confirms presence of the access license when a data transmission request is received from the user device, and sends a request to confirm effectiveness of the access license to the authentication device, when the access license is present, and (ii) decodes the data base using a key obtained by decoding the decoding key of the data base, and extracts the requested data and sends the same to the user device, when the decoding key for the decoding key of the data base is received from the authentication device, and
the authentication device (i) judges presence of an access right, when the request to authenticate an access right to access data of the data base is received from the user device, and sends an access license to access the data to the user device, when the access right is present , and (ii) judges effectiveness of the access license when a request to confirm effectiveness of the access license is received from the data management device, and sends the decoding key for the decoding key of the data base to the data management device, when the access license is effective.

2. The information management system according to Claim 1, wherein the user device (i) sends a request to confirm an access right to access data of the data base is sent to the authentication device according to an input of the user, and when an access license to access the data and a decoding key of the data are received from the authentication device, sends a data transmission request, along with the access license, to the data management device, and (ii) decodes the data using the decoding key for the data when the encrypted requested data is received from the data management device,
the data management device (i) confirms presence of the access license when a data transmission request is received from the user device, and sends a request to confirm effectiveness of the access license to the authentication device when the access license is present, and (ii) decodes the data base using the key obtained by decoding the decoding key of the data base, and extracts the requested data, encrypts the same by the encryption key, and then sends the same to the user device when a decoding key for the decoding key of the data base and the decoding key for the data are received from the authentication device, and
the authentication device (i) judges presence of the access right, when request to authenticate an access right to access data of the data base is received from the user device, and sends the access license to the data and a decoding key of the data to the user device, when the access right is present, and (ii) judges effectiveness of the access license, when a request to confirm effectiveness of the access license is received from the data management device, and sends a decoding key for the decoding key of the data base and an encryption key for the data to the data management device, when the access license is effective.

3. The information management system according to Claim 1 or Claim 2, wherein
the user device further (i) when a message to notify that authentication of access to the data is disabled is received from the authentication device, outputs the message to notify that the access authentication is disabled via an output device of the user device, and (ii) when a message to notify that access to the data is disabled is received from the data management device, outputs the message to notify that the access is disabled via the output device of the user device,
the data management device further (i) when a data transmission request is received from the user device, confirms presence of the access license, and when the access license is absent, sends a message to notify that access is disabled to the user device, and (ii) when a message to notify that the access license is not effective is received from the authentication device, sends a message to notify that access is disabled to the user device, and
the authentication device further (i) when a request to authenticate an access right to access the data base is received from the user device, judges presence of the access right, and when the access right is absent, sends a message to notify that the access authentication is disabled to the user device, and (ii) when a request to confirm effectiveness of the access license is received from the data management device, judges effectiveness of the access license, and when the access license is not effective, sends a message to notify that the access license is not effective to the data management device.

4. The information management system according to any of Claims 1 to 3, wherein
a plurality of data bases and a plurality of users exist, and each data base is assigned to each user individually,
the data management device encrypts and manages each data base individually, and
the authentication device manages the data access right of each user, with the access right being corresponded to a data base assigned to each user.

5. The information management system according to any of Claims 1 to 4, wherein effectiveness of the access license is determined by an elapsed time from time of issuing the access license.

6. The information management system according to any of Claims 1 to 5, wherein the decoding key of the data base is randomly generated when the data base is created, and encrypted and saved in the data management device, and the decoding key for the decoding key of the data base is saved in the authentication device.

7. The system according to any of Claims 1 to 6, wherein the access license which is sent by the authentication device and the decoding key for the decoding key of the data base can be used only once.

8. The system according to any of Claims 2 to 7, wherein the encryption key for the data which is sent by the authentication device and the decoding key for the data can be used only once.

9. The information management system according to any of Claims 1 to 8, wherein the user device saves the record of one or more events selected from copy, print out and hard copy of the data.

10. The information management system according to any of Claims 1 to 9, wherein the data management device saves the record of events related to access to the data.

11. The system according to any of Claims 1 to 10, wherein the authentication device saves the record of events related to the authentication.

12. An information management system, comprising:
a data management device which is disposed at a data center, and encrypts and saves an encrypted data base for saving electronic data and a decoding key of the data base, so as to manage access to the data base;
a user device, which is disposed at a user site, for saving a first decoding key for the decoding key of the data base, and can communicate with the data management device via an Internet network; and
an authentication device, which is disposed at an authentication center, for saving a second decoding key for the decoding key of the data base so as to manage an access right of the user to access the data base, and can communicate with the user device and the data management device via the Internet network,
the first decoding key saved by the user, the second decoding key saved by the authentication center, and an effective access license from the authentication center being required for the user to access data of the data center, wherein
the user device (i) sends a request to confirm an access right to access the data of the data base to the authentication device according to an input of the user, and when an access license to the data is received from the authentication device, sends a data transmission request, along with the access license and the first decoding key, to the data management device, and (ii) receives the requested data from the data management device,
the data management device (i) confirms presence of the access license and presence of the first decoding key, when a data transmission request is received from the user device, and sends a request to confirm effectiveness of the access license to the authentication device, when the access license and the first decoding key are present, and (ii) when the second decoding key for the decoding key of the data base is received from the authentication device, decodes the decoding key of the data base using the first decoding key and the second decoding key, decodes the data base using the decoded decoding key of the decoded data base, and extracts the requested data and sends the same to the user device, and
the authentication device (i) judges presence of the access right, when a request to authenticate the access right to access data of the data base is received from the user device, and sends an access license to access the data to the user device, when the access right is present, and (ii) judges effectiveness of the access license, when a request to confirm effectiveness of the access license is received from the data management device, and sends the second decoding key for the decoding key of the data base to the data management device, when the access license is effective.

13. The information management system according to Claim 12, wherein the user device (i) sends a request to confirm an access right to access data of the data base to the authentication device according to an input of the user, and sends a data transmission request, along with an access license and the first decoding, to the data management device, when the access license to access the data and a decoding key of the data are received from the authentication device, and (ii) decodes the data using the decoding key of the data, when the encrypted data requested is received from the data management device,
the data management device (i) confirms presence of the access license and presence of the first decoding key, when a data transmission request is received from the user device, and sends a request to confirm effectiveness of the access license to the authentication device, when the access license and the first decoding key are present, and (ii) when the second decoding key for the decoding key of the data base and the encryption key for the data are received from the authentication device, decodes the decoding key of the data base using the first decoding key and the second decoding key, decodes the data base using the decoded decoding key of the data base, and extracts the requested data, encrypts the data using the encryption key for the data, and then sends the same to the user device, and
the authentication device (i) judges presence of an access right, when a request to authenticate the access right to access data of the data base is received from the user device, and when the access right is present, the access license to the data and the decoding key of the data are sent to the user device, and (ii) judges effectiveness of the access license, when a request to confirm effectiveness of the access license is received from the data management device, and sends the second decoding key for the decoding key of the data base and the encryption key of the data to the data management device, when the access license is effective.

14. The information management system according to Claim 12 or Claim 13, wherein
the user device further (i) when a message to notify that access authentication to access the data is disabled is received from the authentication device, outputs the message to notify that access authentication is disabled via an output device of the user device, and (ii) when a message to notify that access to the data is disabled is received from the data management device, outputs the message to notify that the access is disabled via the output device of the user device,
the data management device further (i) when a data transmission request is received from the user device, confirms presence of the access license and presence of the first decoding key, and when the access license or the first decoding key is absent, sends a message to notify that access is disabled to the user device, and (ii) when a message to notify that the access license is not effective is received from the authentication device, sends a message to notify that access is disabled to the user device, and
the authentication device further (i) when a request to authenticate an access right to access the data base is received from the user device, judges presence of the access right, and when the access right is absent, sends a message to notify that the access authentication is disabled to the user device, and (ii) when a request to confirm effectiveness of the access license is received from the data management device, judges effectiveness of the access license, and when the access license is not effective, sends a message to notify that the access license is not effective to the data management device.

15. The information management system according to any of Claims 12 to 14, wherein a plurality of data bases and a plurality of users exist, and each data base is assigned to each user individually,
the data management device encrypts and manages each data base individually, and the authentication device manages the data access right of each user, with the access right being corresponded to a data base assigned to each user.

16. The information management system according to any of Claims 12 to 5, wherein effectiveness of the access license is determined by an elapsed time from time of issuing the access license.

17. The information management system according to any of Claims 12 to 16, wherein the decoding key of the data base is randomly generated when the data base is created, and encrypted and saved in the data management device, and the first decoding key for the decoding key of the data base is saved in the user device, and the second decoding key is saved in the authentication device.

18. The system according to any of Claims 12 to 17, wherein the access license which is sent by the authentication device and the decoding key for the decoding key of the data base can be used only once.

19. The system according to any of Claims 13 to 18, wherein the encryption key of the data which is sent by the authentication device and the decoding key of the data can be used only once.

20. The information management system according to any of Claims 12 to 19, wherein the user device saves record of one or more events selected from copy, print out and hard copy of the data.

21. The information management system according to any of Claims 12 to 20, wherein the data management device saves record of events related to access to the data.

22. The system according to any of Claims 12 to 21, wherein the authentication device saves record of events related to the authentication.
